# EUROPEAN PATENT APPLICATION

(11) **EP 4 242 761 A1**
(43) Date of publication of application: **13.09.2023**
(21) Application number: 23160453.9
(22) Date of filing: 07.03.2023
(51) Int. Cl.: G05B 19/418

(54) **AUTOMATED SYSTEM AND METHOD FOR SPARE-PARTS MANAGEMENT AND MONITORING IN A CONTAINER PACKAGING LINE**

(30) Priority: 11.03.2022 EP 22161640
(71) Applicant: Tetra Laval Holdings & Finance S.A., 1009 Pully (CH)
(72) Inventor: Borelli, Gabriele, 41123 Modena (IT); Campo, Federico, 41123 Modena (IT)
(74) Representative: Tetra Pak - Patent Attorneys SE

(57) **Abstract**

An automated system (100) for spare part management and monitoring in a packaging line (1) having at least a packaging machine (2) for packaging containers filled with a pourable food product, the system envisages: machine-readable identification devices (24) associated with the spare parts (21), for unique identification thereof; a number of reader devices (30), arranged at the packaging line (1) to perform automatic reading of the identification devices (24) coupled to the spare parts (21), so as to determine their unique identifications when the spare parts (21) are used in the packaging line (1); a spare-part database (42) included in a data storage (14) to store maintenance information associated with the unique identification of the spare parts (21), the maintenance information being related to use of the spare parts (21) in the packaging line (1); and a processing unit (12) operatively coupled to the data storage (14) to process the maintenance information in association with operative information of the packaging line (1), in order to monitor and evaluate operation and performance of the spare parts (21) in the packaging line (1).

## Description

### TECHNICAL FIELD

The present invention relates to an automated system and method for spare-parts management and monitoring in a container packaging line, in particular for the production of composite packages filled with a pourable food product.

### BACKGROUND ART

As is known, many liquid, semi-liquid or pourable food products, such as fruit juice, UHT (ultra-high-temperature treated) milk, wine, tomato sauce, etc., are distributed and marketed in composite packages made of a multilayer composite packaging material.

A typical example is the parallelepiped-shaped package for pourable food products known as Tetra Brik Aseptic^{™}, which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Composite packages of this sort are normally produced within fully automatic packaging lines (or plants), which form the composite packages starting from a web of multilayer composite packaging material and fill the composite packages with the pourable food product.

A typical packaging line comprises at least a filling machine, which forms the composite packages starting from the multilayer composite packaging material and fills the composite packages with the pourable food product. Additionally, the packaging line may also comprise upstream and/or downstream treatment equipment, receiving the composite packages from the filling machine and executing additional treatments on the composite packages. The downstream treatment equipment may for example comprise one or more of a buffer unit for temporarily buffering the composite packages; an application unit for applying straws or other elements on the composite packages; a grouping unit, e.g. a palletizer unit, for grouping a plurality of composite packages together in a storing unit (such as a pallet).

It is known that in such packaging lines spare parts or components may play a critical role in ensuring reliability and efficiency of operation.

Traditionally, spare parts are replaced by operators during corrective or planned maintenance operations, but seldom these changes are properly registered (logged) during the same maintenance operations. Changes of spare parts are indeed typically logged or registered manually by the operators, possibly with the aid of software applications ("apps") in order to make more user-friendly the insertions of new maintenance instances.

Reports of maintenance events and operations are therefore influenced by human factors. This brings about several problems, such as a lack of control of the maintenance interventions (with possible errors and malfunctions) and an inefficient control of the actual components used in the packaging machines of the packaging line.

In this regards, it has been shown that a high percentage of the technical issues occurring in the packaging lines are currently due to a non-proper management and monitoring of the associated spare parts.

Moreover, errors or inaccuracies in reporting the maintenance operations manually by the operators may determine biases and poor quality in data collected and later used for analytics (e.g. by means of artificial intelligence or similar data-driven solutions).

Hence, it would surely be desirable to develop an efficient solution for managing and monitoring the use of spare parts in the packaging lines, allowing to solve the above discussed issues.

### DISCLOSURE OF INVENTION

It is an object of the present disclosure to provide an improved solution allowing to satisfy, at least in part, the above-mentioned need.

According to the present disclosure, an automated system and method for managing and monitoring spare parts in a container packaging line are therefore provided, as defined in the appended claims.

### BRIEF DESCRIPTION OF THE DRAWINGS

A non-limiting embodiment of the present invention will be described by way of example with reference to the accompanying drawings, in which:
- Figure 1 shows a schematic block diagram of a packaging line with an automated spare-part monitoring system, according to an embodiment of the present solution;
- Figures 2A and 2B show respective spare parts used in the packaging line, provided with a respective identification device;
- Figure 3 is a schematic block diagram of a central data storage solution in the system of Figure 1; and
- Figure 4 shows a further embodiment of an identification device in the automated spare-part monitoring system.

### BEST MODE FOR CARRYING OUT THE INVENTION

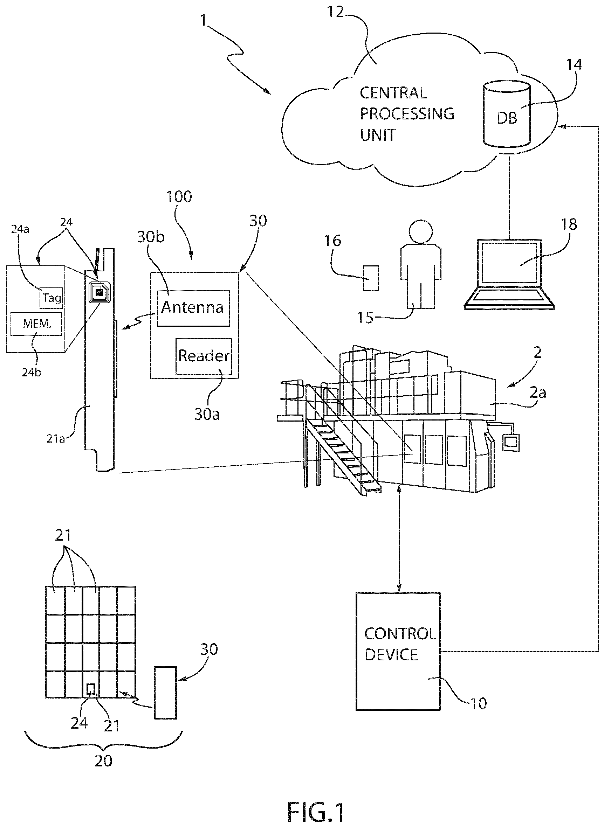

Figure 1 shows a schematic block diagram of a packaging line (or plant) 1, including one or more packaging machines 2 (only one of these packaging machines, e.g. a filling machine 2a, is shown in Figure 1 by way of example) configured to produce packaging containers, in particular composite packages formed from a multilayer composite packaging material, filled with a pourable product, in particular a food product such as milk, cream, fruit juice, wine, tomato sauce, sugar, salt, emulsions, solutions containing solid particles (e.g. legumes), etc.

Multilayer composite packaging material may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner face of the packaging containers eventually contacting the pourable food product packaged within the same packaging containers.

Multilayer composite packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, multilayer composite packaging material may also comprise a further layer of heat-seal plastic material being interposed between the layer of gas- and light-barrier material and the layer of fibrous material.

Each packaging container may extend along a longitudinal axis, having a longitudinal seam portion (extending along the respective longitudinal axis) and a pair of transversal sealing bands, in particular a transversal top sealing band and a transversal bottom sealing band. In particular, each packaging containers 4 may have a substantially parallelepiped structure.

Furthermore, packaging containers may comprise at least two transversal walls (being transversal to the respective longitudinal axis) and being disposed at opposite sides of packaging containers and a plurality of lateral walls extending between the transversal walls.

More specifically, one respective transversal wall of each packaging containers may define a bottom wall and the other respective transversal wall defines a top wall. In particular, the bottom wall may define a support surface adapted to be placed on a (horizontal) plane, such as e.g. a shelf within a distribution point, and the top wall is opposed to the bottom wall.

In a manner not shown in details, the filling machine 2a may comprise at least:
- a conveying device for advancing a web of multilayer packaging material along an advancement path;
- a tube forming device for forming a tube from the advancing web of multilayer packaging material;
- a sealing device for longitudinally sealing the tube;
- a filling device, coupled to the inlet duct, for filling the tube with the pourable food product; and
- a package forming unit for forming the tube and to transversally seal the tube for forming composite packages from the tube filled with the pourable food product.

In more details, the package forming unit may comprise at least:
- a forming device configured to form, transversally seal and transversally cut the tube for obtaining composite packs, in particular pillow packages; and
- a final folder configured to receive the composite packs from the forming device and to form packaging containers from the composite packs, in particular the pillow packages.

Additionally, the filling machine 2a may also comprise a sterilization device arranged upstream from the tube forming device along the advancement path and configured to sterilize (e.g. by means of physical and/or chemical sterilization) the web of multilayer composite packaging material.

In a manner not shown in Figure 1, the packaging line 1 may further comprise downstream processing equipment, configured to receive the packaging containers from the filling machine 2a via a conveying device and executing additional treatments on the same packaging containers, such as: printing information (such as a best before date and/or a lot number) and/or pictures (e.g. graphical representations, barcodes, QR codes, data matrixes, logo, symbols, etc.); applying straws on the composite packages; grouping a plurality of composite packages together into a storing unit, e.g. into a pack or pallet.

The packaging line 1 further comprises a control device 10 for controlling packaging operations; the control device 10 for example includes a PLC (Programmable Logic Controller) unit or any suitable processing and computing unit, configured to execute a computer program designed to control the operations of the same packaging line 1.

The control device 10 is operatively coupled, e.g. via the Internet and/or an internal network, to a central processing unit 12, e.g. located in a remote server (e.g. in the "cloud") or in a physical server at the plant site (which can also be accessed by an external network), where operating data and information relating to the packaging line 1 are received and stored in a data storage 14, including a number of database resources (all data stored in the data storage 14 are available e.g. for offline/non real time processing and analytics).

As shown in the same Figure 1, an operator 15 of the filling plant 1, having a portable or mobile device 16 (e.g. a smartphone, a tablet, a phablet or similar), is able to access the central processing unit 12 and data storage 14, via a software application ("app"), in order to input and/or retrieve operating data and information relating to the operation of the packaging line 1.

The operator 15 may also communicate with the central processing unit 12 via a fixed computer (or similar processing apparatus), provided with a suitable graphical user interface; in a manner not shown, the computer may also be part of the control device 10 of the packaging line 1. The same operator 15 is also able to interact with the control device 10, either directly or through the mobile device 16.

The package line 1 moreover comprises a storage or warehouse 20, where packaging material and various kinds of spare parts or components 21 (including for examples inductors to produce the above discussed sealing operations, jaws and knives to produce the above discussed cuts for forming the composite packages, but also other components such as e-beams, servomotors, pumps, etc.) for the operation of the packaging machines 2 of the same packaging line 1 are stored, when not in use.

According to an aspect of the present solution, a spare-part management and monitoring system 100 associated with the packaging line 1 provides that spare parts 21 (by way of example, Figure 1 shows schematically an inductor 21a, that is used in the filling machine 2a, to produce longitudinal sealing in the packaging containers being formed) are univocally associated with corresponding machine-readable identification devices 24, configured to allow unique identification thereof by means of an automatic reading system.

The identification devices 24 may include a RFID (Radio Frequency Identification) tag 24a, implementing the unique identification for the corresponding spare parts 21, and, according to a possible embodiment, a non-volatile memory unit 24b, storing further data associated with the same spare parts 21 and their operation (as discussed in more details in the following).

The identification device 24 may conveniently be made as an integrated system, e.g. as a System-on-Chip (SoC).

Moreover, the identification devices 24 are made with materials suited for a harsh environment and high temperatures, in order to withstand operating conditions that may occur in the packaging line 1; for example, the identification devices 24 are made with ceramic materials and are compatible with metallic parts (e.g. with the above cited inductors and knives).

The identification devices 24 may be coupled to the corresponding spare parts 21 in any suitable manner.

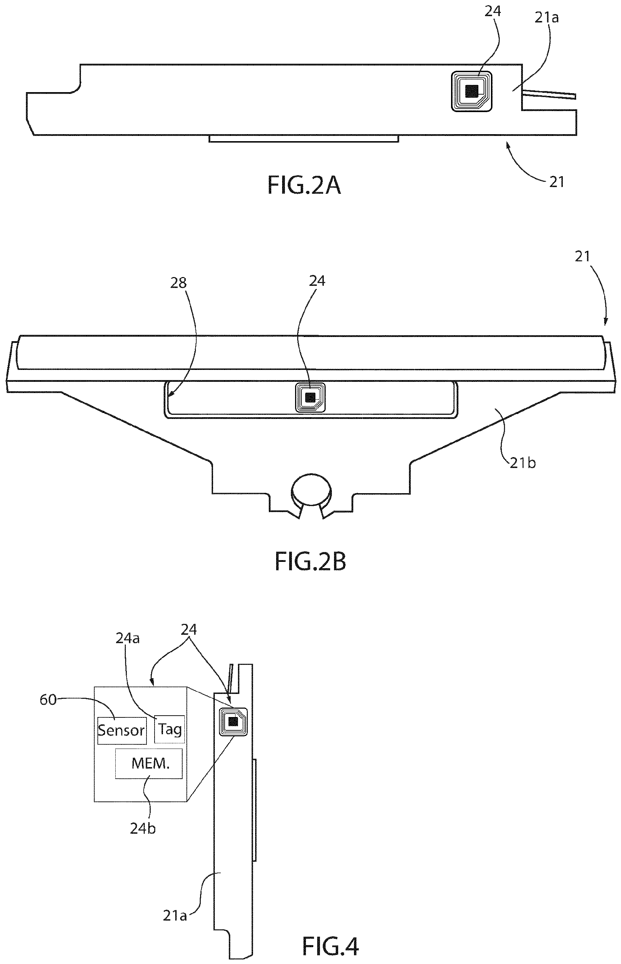

For example, Figure 2A shows schematically the coupling of an identification device 24 on an external surface 27 of a corresponding spare part 21, in this case the inductor 21a, e.g. by means of a layer of glue or other bonding material; Figure 2B shows the mounting of a respective identification device 24 within a seat 28 provided at the external surface 27 of a corresponding spare part 21, in this case a knife 21b (it is clear, however, that these are only exemplary embodiments, and any other coupling between the identification devices 24 and the corresponding spare parts 21 may be envisaged).

The packaging line 1 further comprises a number of reader devices 30 (in Figure 1 one reader device 30 is schematically shown by way of example, coupled to the filling machine 2a), which are suitably arranged and configured to perform reading of the identification devices 24 coupled to the spare parts 21, so as to determine their unique identifications.

In general, the reader devices 30 are conveniently located in the packaging line 1 so as to allow a complete tracking of the spare parts 21 used therein; the reader devices 30 may be arranged at the packaging machines 2, but also at other locations, e.g. at the warehouse 20 of the same packaging line 1 (as schematically shown in the same Figure 1), so as to detect and monitor the spare parts 21 stored therein.

In a possible embodiment, each reader device 30 includes a RFID reader 30a and at least one RFID antenna 30b, coupled to the RFID reader 30a and arranged to receive the radiofrequency waves emitted by the RFID tag 24a of the identification device 24 (in a known manner, here not discussed in detail).

Several RFID antennas 30b may be coupled to a single RFID reader 30a in the reader device 30. For example, a single RFID reader 30a may be coupled to a packaging machine 2 of the packaging line 1 (e.g. to the above discussed filling machine 2a) and several RFID antennas 30b may be arranged in suitable locations at the same packaging machine 2, in order to read the RFID tags 24a associated with different spare parts 21 being concurrently used in the same packaging machine 2 (e.g. respective RFID antennas 30b may be associated with the inductors 21a, with the knives 21b, etc.).

According to a possible aspect of the present solution, the RFID reader 30a may be configured to determine the location of the spare parts 21, e.g. with respect to the respective packaging machine 2, based on the characteristics (e.g. the amplitude or signal strength) of the RFID signals detected by the corresponding RFID antennas 30b. For example, the RFID reader 30a may be configured to determine a filling unit in the filling machine 2a (among a possible number of filling units) where an inductor 21a is used.

During operation, in particular at maintenance events or whenever a spare part 21 is to be installed or removed in a packaging machine 2 of the packaging line 1 (e.g. in the filling machine 2a), the control device 10 of the packaging line 1 is configured to cooperate with the relevant reader device 30, in order to identify the new spare part 21 by reading the unique identification stored in the corresponding identification device 24.

The control device 10 moreover registers the time ("timestamp") associated with the spare-part replacement.

It is noted that identification of the spare parts 21 in the packaging line 1 may also be implemented in a time continuous manner or at preset time intervals (for example to assess the usage time or other operating parameters associated with the same spare parts 21).

In general, the control device 10 acquires maintenance information regarding the identified spare part 21 and the related maintenance operations, in particular including data on the packaging machine 2 where the spare part 21 has been introduced in case of a replacement, the location within the packaging machine 2 or generally within the packaging line 1 and the timestamp associated with the spare part identification.

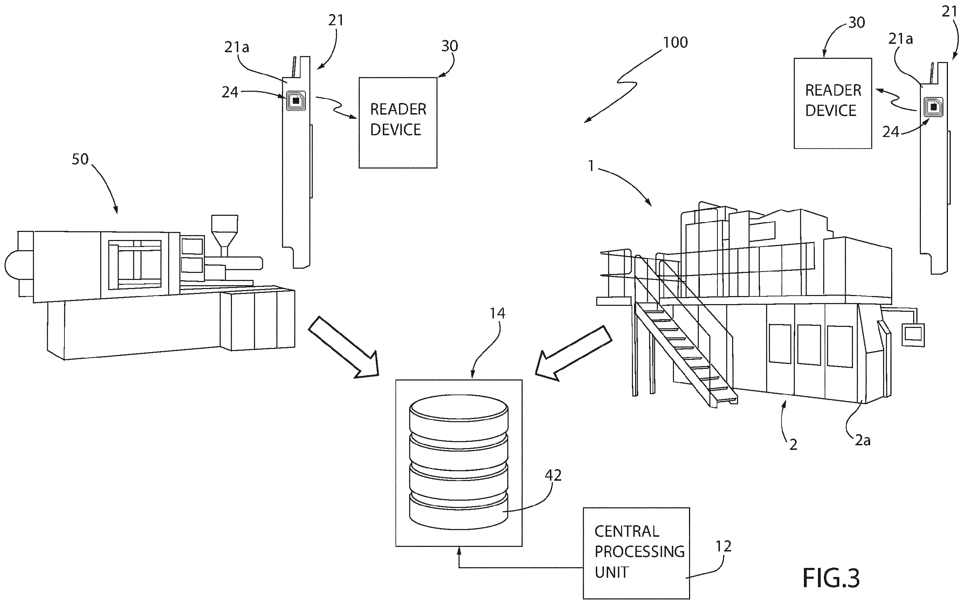

As schematically shown in Figure 3, the discussed maintenance information are transmitted by the control device 10 to the central processing unit 12 to be conveniently stored in a spare-part database 42 included in the data storage 14, in association with the unique identification of the individual spare parts 21.

According to an aspect of the present solution, the central processing unit 12 is configured to store in the data storage 14 (e.g. in the same spare-part database 42 or in one or more further data base resources operatively coupled to the spare-part database 42) manufacturing information relating to the spare parts 21, in association with their unique identification.

Manufacturing information may be acquired at a manufacturing plant, denoted schematically with 50 in the same Figure 3, where spare parts 21 (in the example, an inductor 21a) are produced, the spare parts 21 being univocally identified by means of at least one further reader device 30 located at the same manufacturing plant 50 and configured to read the corresponding indemnification devices 24; these manufacturing information are transmitted to the central processing unit 12 for storage into the data storage 14 in association with the identification of the corresponding spare part 21.

The manufacturing information may include for example: batch number; part number; manufacturing machine settings and corresponding electrical parameters; spare-part design data; actual measured data relating to the characteristics of the manufactured spare parts 21 (acquired by means of suitable sensors at the manufacturing plant 50); etc.

According to a possible embodiment, the above discussed manufacturing information may also be stored in the non-volatile memory unit 24b of the identification devices 24 coupled to the spare parts 21 (the manufactured spare parts 21 being "smart" components, carrying not only a related unique identifier, but also a plurality of information relating to their manufacturing and design characteristics).

According to a further aspect of the present solution, the central processing unit 12 (or any other processing unit of the spare part management and monitoring system 100) is configured to process, in association with the unique identification of the spare parts 21, a plurality of operative information related to the operating characteristics of the packaging machine (and/or of the whole packaging line 1) where the same spare parts 21 are used; these operative information are also stored into, and retrieved from, the data storage 14 (e.g. being stored in the same database 42 or in one or more further data base resources).

The operative information may include, for example: operating temperatures; filling product characteristics; packaging material characteristics; packaging machine settings and configuration; packaging machine maintenance status; packaging machine environment parameters; etc.

The operative information may also be related to operating characteristics of the same spare parts 21, acquired during operation in the packaging line 1, e.g. when the spare parts 21 are used in a packaging machine 2 of the same packaging line 1; these operating characteristics may include performance data related to the operating performances of the spare parts 21 during their life time (the data being acquired in association with a corresponding timestamp).

Suitable sensors along the packaging line 1, operatively coupled to the packaging machines 2 and to the same spare parts 21, may be configured to provide at least part of the above discussed operative information during operation of the packaging line 1; the same operative information may be conveniently transmitted to the data storage 14 by the control device 10 of the packaging line 1.

The above discussed information and data (in particular, the maintenance information relating to spare part replacements, the manufacturing information and the operative information), which are stored in the data storage 14, may thus be retrieved and available for real time processing and/or for offline/non real time processing and analytics.

According to an aspect of the present solution, the above information and data may be aggregated and jointly processed (by the central processing unit 12 and/or by the control device 10 and/or by any further processing device of the spare part management and monitoring system 100), in order to monitor and evaluate operation and overall performance of the spare parts 21 in the packaging line 1.

In particular, performance of the spare parts 21 may be evaluated in relation to the packaging machine (or packaging line) condition, settings and environment and moreover in relation to the manufacturing characteristics of the same spare parts 21. A complete and thorough analysis may therefore be implemented, based on spare part manufacturing, installation and performance information and based on their interaction with the packaging line 1.

All data acquired and stored may thus facilitate the implementation of AI - Artificial Intelligence, or in general data-driven solutions, for an overall improvement of the packaging operations.

Moreover, full traceability of the spare parts 21 along all the spare-part supply chain, from manufacturing to storage, installation and operation in the packaging line 1 may be achieved, with a tracking in terms of where, when and how the same spare parts 21 are used. By means of the identification devices 24, authenticity of the spare parts 21 may be automatically verified through all the spare part supply chain.

The above control and monitoring of the spare part performances also allows implementation of predictive and/or preventive maintenance strategies, for example with the possibility to plan in advance maintenance operations for spare part replacements and/or re-supplying of spare parts 21 in the warehouse 20 of the packaging line 1.

The advantages of the discussed solution will be clear from the foregoing description.

In any case, it is again underlined that the disclosed spare part management and monitoring system 100 offers a reliable and effective solution for managing and monitoring spare parts 21 in a packaging line 1, with the implementation of an automatic reading system of the unique identification associated with each spare part 21 used in the same packaging line 1.

Formation of the packaging containers may therefore be improved and optimized, with a reduction of issues and faults.

In particular, errors associated in known solutions with the manual intervention of operators in logging maintenance operations performed in the packaging line 1 are avoided and the related issues are eliminated.

Clearly, changes may be made to what described herein without, however, departing from the scope of protection as defined in the accompanying claims.

In particular, according to a further possible embodiment, which is shown schematically in Figure 4, the identification device 24 coupled to a respective spare part 21 may be provided with one or more embedded sensors 60, e.g. a temperature sensor.

These embedded sensor(s) 60 may be integrated within the same integrated system of the identification device 24, e.g. within the same SoC.

Advantageously, this adds the capability for the identification device 24 to detect one or more parameters associated to the operation of the spare parts 21 and to communicate corresponding variable measured data.

For instance, the identification device 24 may be able to detect a current temperature of the spare part 21 to which it is coupled, during its operation in the corresponding packaging machine 2.

This may provide a condition monitoring of the spare parts 21 during their operation, advantageously without requiring any further power supply source (e.g. batteries) nor direct electrical connections for additional sensors.

It is underlined that the discussed solution may be applied for any packaging line 1, including any packaging machine 2, and for any kind of pourable food product.

Moreover, it is clear that in a possible embodiment only some of the spare parts 21 used in the packaging line 1 may be provided with a unique identification, e.g. only those spare parts 21 whose operation is considered to be critical for the operation of the packaging line 1.

Also, the number of reader devices 30 in the packaging line 1 may vary, according to the need of the control and monitoring operations of the relevant spare parts 21; in general, the reader devices 30 may be installed with a desired granularity and modularity in key points of the packaging line 1.

Moreover, according to a possible embodiment, although the spare part management and monitoring system 100 allows to automatically recognize spare part replacement, as discussed above, operators may also be requested, e.g. via a suitable software application running on a personal mobile device, to provide additional details regarding the maintenance operations being performed.

## Claims

1. - An automated system (100) for spare part management and monitoring in a packaging line (1) including at least a packaging machine (2) configured for packaging containers filled with a pourable food product, the system (100) comprising:
machine-readable identification devices (24) associated with the spare parts (21), for unique identification thereof;
a number of reader devices (30), arranged at the packaging line (1) and configured to perform automatic reading of the identification devices (24) coupled to the spare parts (21), so as to determine their unique identifications when the spare parts (21) are used in the packaging line (1);
a spare-part database (42) included in a data storage (14) configured to store maintenance information associated with the unique identification of the spare parts (21), the maintenance information being related to use of the spare parts (21) in the packaging line (1);
a processing unit (12) operatively coupled to the data storage (14) and configured to process the maintenance information in association with operative information of the packaging line (1), in order to monitor and evaluate operation and performance of the spare parts (21) in the packaging line (1).

2. - The system according to claim 1, wherein the spare-part database (42) is configured to store manufacturing information relating to manufacturing of the spare parts (21), in association with their unique identification; and the processing unit (12) is configured to process the maintenance information also in association with the manufacturing information associated with the spare parts (21).

3. - The system according to claim 1 or 2, wherein the maintenance information includes one or more of: data on the packaging machine (2) where the corresponding spare part (21) is used; the location within the packaging machine (2) or generally within the packaging line (1); and a time associated with the spare part identification.

4. - The system according to any of the preceding claims, wherein the operative information is related to operating characteristics of the packaging machine (2) where the spare parts (21) are used; the operative information including one or more of: operating temperatures; filling product characteristics; packaging material characteristics; packaging machine settings and configuration; packaging machine maintenance status; and packaging machine environment parameters.

5. - The system according to claim 4, wherein the operative information also includes operating characteristics of the spare parts (21), acquired during their operation in the packaging line (1) in association with a corresponding timestamp.

6. - The system according to any of the preceding claims, wherein each identification device (24) includes a RFID - Radio Frequency Identification - tag (24a), implementing the unique identification for the corresponding spare part (21), and a non-volatile memory unit (24b), storing data associated with the spare part (21) and /or its operation.

7. - The system according to claim 6, wherein the identification devices (24) include one or more embedded sensors (60), configured to detect one or more operating parameters associated with operation of the corresponding spare part (21) in the packaging machine (2).

8. - The system according to claim 6 or 7, wherein the identification devices (24) are made with materials suited for a harsh environment and high temperatures, in order to withstand operating conditions in the packaging line (1).

9. - The system according to any of claim 6-8, wherein the RFID tag (24a) of the identification device (24) is coupled on an external surface (27) or within a seat (28) provided at the external surface (27) of the corresponding spare part (21).

10. - The system according to any of claims 6-9, wherein each reader device (30) includes a RFID reader (30a) and a number of RFID antennas (30b), coupled to the RFID reader (30a) and arranged to receive radiofrequency waves emitted by the RFID tags (24a) of a corresponding number of spare parts (21).

11. - The system according to claim 10, wherein the RFID reader (30a) is configured to determine the location of the spare parts (21), with respect to a respective packaging machine (2) and/or the packaging line (1), based on characteristics of the RFID signals detected by the corresponding RFID antennas (30b).

12. - The system according to any of the preceding claims, comprising a control device (10) at the packaging line (1), configured to cooperate with the reader devices (30), in order to identify the spare parts (21) by reading the unique identification stored in the corresponding identification device (24) and to register the timestamp associated with spare-part replacements; the control device (10) being operatively coupled to the processing unit (12) to transmit the identifications and the maintenance information associated with the corresponding spare parts (21).

13. - The system according to any of the preceding claims, wherein the reader devices (30) are located along the packaging line (1) to implement a complete tracking of the spare parts (2) used therein, including at the packaging machines (2) and at a warehouse (20) of the packaging line (1) where the spare parts (21) are stored.

14. - The system according to any of the preceding claims, wherein the processing unit (12) is configured, through the control and monitoring of the spare part performances, to implement predictive and/or preventive maintenance strategies.

15. - The system according to any of the preceding claims, wherein the spare parts (21) include one or more of: inductors, jaws, knives, e-beams, servomotors, pumps.

16. - A packaging line (2), comprising the system (100) for spare part management and monitoring, according to any of the preceding claims

17. - An automated method for spare part management and monitoring in a packaging line (1) including at least a packaging machine (2) configured for packaging containers filled with a pourable food product, the method comprising:
performing automatic reading of machine-readable identification devices (24) associated with the spare parts (21) for unique identification thereof;
storing in a spare-part database (42) included in a data storage (14) maintenance information associated with the unique identification of the spare parts (21), the maintenance information being related to use of the spare parts (21) in the packaging line (1);
processing the maintenance information in association with operative information of the packaging line (1), in order to monitor and evaluate operation and performance of the spare parts (21) in the packaging line (1) .
